# EUROPEAN PATENT SPECIFICATION

(11) **EP 3 605 857 B1**
(45) Date of publication and mention of the grant of the patent: **29.11.2023**
(21) Application number: 17902226.4
(22) Date of filing: 24.03.2017
(51) Int. Cl.: H04W 76/19, H04B 7/06, H04W 16/28, H04W 80/02

(54) **INFORMATION CONFIGURATION APPARATUS, MONITORING APPARATUS AND METHOD, AND COMMUNICATION SYSTEM**
INFORMATIONSKONFIGURATIONSVERFAHREN, ÜBERWACHUNGSVORRICHTUNG UND -VERFAHREN SOWIE KOMMUNIKATIONSSYSTEM
APPAREIL DE CONFIGURATION D'INFORMATIONS, APPAREIL ET PROCÉDÉ DE SURVEILLANCE, ET SYSTÈME DE COMMUNICATION

(43) Date of publication of application: 05.02.2020
(73) Proprietor: Fujitsu Limited, Kawasaki-shi, Kanagawa 211-8588 (JP)
(72) Inventor: SONG, Lei, Beijing 100027 (CN); WANG, Xin, Beijing 100027 (CN); ZHOU, Hua, Beijing 100027 (CN)
(74) Representative: Haseltine Lake Kempner LLP
(86) International application number: PCT/CN2017/078151
(87) International publication number: WO 2018/170909

(56) References cited:
- EP-A1- 3 002 983
- EP-A1- 3 469 846
- EP-A1- 3 606 142
- WO-A1-2016/023227
- CN-A- 104 079 336
- CN-A- 104 718 712
- CN-A- 104 734 761

## Description

### Technical Field

This disclosure relates to the field of information technologies, and in particular to a network equipment, an user equipment and a communications system.

### Background

Massive multiple-input multiple-output (MIMO) technology is a key technology in a new radio (NR) system, which includes studies of the frequency bands below 6GHz and above 6GHz. With the increase of the transmission frequency bands, the fading and loss in the transmission will increase accordingly, and the beamforming technology becomes a key technology in the massive MIMO as it may effectively compensate for the fading.

At present, beamforming techniques include analog beamforming (ABF), digital beamforming (DBF), and analog-digital hybrid beamforming (HBF), etc. In the ABF, beamforming is performed on the analog domain, which is less complex to implement than the DBF, but beamforming factors over the entire time domain symbols are identical. When the number of users is relatively large, the ABF may impose certain restrictions on scheduling or user performance. In the DBF, the beamforming is performed on the digital domain, and each resource element in the time-frequency domain may adjust the beamforming factors as needed, but the complexity increases with the increase of the number of antennas, hence, it is not applicable to a massive MIMO system. And the HBF is a compromise between the ABF and the DBF in terms of performance and processing complexity, in which beamforming may be performed in both analog and digital domains. However, the HBF is still limited to beamforming operations on the analog domain, and the number of beams supported on each symbol is limited.

In the study of the NR, in order to improve the reliability of transmission, a beamforming technique in which multiple beams are simultaneously transmitted for a physical channel (such as a broadcast channel, a data channel, and a control channel, etc.) is allowed. However, in the multi-beam beamforming technique, there still exists a case of transmission failure due to a transmission characteristic of a high frequency band, rotation of a mobile station, and blocking of an obstacle, and the like, in which case by adjusting service beams, it is possible to solve a problem of transmission failure at a physical layer and a media access control (MAC) layer. Therefore, a beam recovery mechanism is introduced in the NR: configuring monitored physical resources and/or pairs of beams monitored by the physical resources by the network device (e.g. a base station) for a user equipment, and the user monitors a transmission state of the beams of the control channels based on the configured physical resources. In a case where the user equipment (UE) detects a transmission failure of a control channel (e.g. an NR physical downlink control channel, NR-PDCCH), it may notifies the network device (such as a base station, e.g. a gNB) of the transmission failure of a current link by transmitting an uplink signal, and the base station may correspondingly select new service beams for the UE to recover the transmission.

It should be noted that the above description of the background is merely provided for clear and complete explanation of this disclosure and for easy understanding by those skilled in the art. And it should not be understood that the above technical solution is known to those skilled in the art as it is described in the background of this disclosure. The document EP3002983A1 describes a control information transmission method, user equipment, and base station.

### Summary

The invention is defined by the independent claims 1, 6 and 10. In some cases, because the number of simultaneously supported beams in the ABF or HBF is limited, each scheduling unit will contain a plurality of symbols for transmitting control signaling when the number of users is relatively large, and beam directions of the symbols may be different. For example, there may exist a plurality of control channel types within the same scheduling unit, such as a common type (available for all UEs), a group common type (available for a group of UEs), and a UE-specific type (for specific UEs). Due to different reliability requirements of the control channel types, for example, a control channel of the common type or the group common type requires higher reliability than a control channel of the UE-specific type, a beam may be relatively wide, or a more robust transmission scheme may be employed. The number of users served by symbols where the control channel of the UE-specific type is located may possibly be relatively small, and a relatively narrow beam may be used to enhance a received signal strength. Thus, beam pairs configured by the two may be different. In addition, when there exists only one control channel type, such as a control channel of the UE-specific type, it is still possible that same control channels of the user are transmitted within different symbols, and due to scheduling and beamforming limitations, different pairs of beams are used for different symbols. Or, within the same scheduling unit, control channels of the same user may use beams within different codebook sets, such as codebook sets with wider beams and codebook sets with narrower beams, etc. It was found by the inventors that in such a case, only configuring monitored physical resources and/or beam pairs will also result in beam failure of a part of symbols, without triggering the beam recovery mechanism.

It was found by the inventors that in this case, when the network device only configures the monitored physical resources and/or beam pairs according to the above-described beam recovery mechanism introduced in the present NR, the UE may take all of the configured physical resources and/or beam pairs as a whole, and may not transmit a beam recovery request until a beam failure triggering condition is satisfied, and the beam recovery mechanism is unable to be timely triggered when a transmission failure occurs in a certain type of control channel.

Furthermore, when the monitoring configuration information of the NR-PDCCH is transmitted on high layer signaling, configuring only one set of monitoring information for the UE may affect flexibility of the scheduling.

Embodiments of this disclosure provide an information configuration apparatus and method, monitoring apparatus and method and a communications system, in which grouping information including physical resources corresponding to control channels and/or beam pairs transmitting control channels is transmitted at the network equipment side, and transmission states of the physical resources and/or the beam pairs corresponding to the grouping of the control channels are monitored at the UE side according to the contents of the configuration information or according to the contents of the configuration information and other configuration information, to obtain transmission states corresponding thereto, and a beam recovery mechanism is triggered in response to the transmission failure of the physical resources and/or the beam pairs corresponding to any group of the control channels, thereby flexibly and punctually dealing with various cases of transmission failures.

An advantage of the embodiments of this disclosure exists in that the grouping information including physical resources corresponding to control channels and/or beam pairs transmitting control channels is transmitted at the network equipment side, and transmission states of the physical resources and/or the beam pairs corresponding to the grouping of the control channels are monitored at the UE side according to the contents of the configuration information or according to the contents of the configuration information and other configuration information, so as to obtain transmission states corresponding thereto, and a beam recovery mechanism is triggered in response to the transmission failure of the physical resources and/or the beam pairs corresponding to any group of the control channels, thereby flexibly and punctually dealing with various cases of transmission failures. The embodiments of this disclosure contain many alternations and modifications within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:
FIG. 1 is a schematic diagram of a communications system of an embodiment of this disclosure;
FIG. 2 is a flowchart of the information configuration method of Embodiment 1 of this disclosure;
FIG. 3 is a flowchart of the monitoring method of Embodiment 2 of this disclosure;
FIG. 4 is a schematic diagram of the method for configuring information and performing monitoring by using the information of Embodiment 3 of this disclosure;
FIG. 5 is a schematic diagram of the information configuration apparatus of Embodiment 4 of this disclosure;
FIG. 6 is a schematic diagram of the monitoring apparatus of Embodiment 5 of this disclosure;
FIG. 7 is a schematic diagram of a structure of a network equipment of an embodiment of this disclosure; and
FIG. 8 is a block diagram of a systematic structure of a user equipment of an embodiment of this disclosure.

### Detailed Description

These and further aspects and features of the present disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes and modifications coming within the terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communications network" or "wireless communications network" may refer to a network satisfying any one of the following communications standards: long term evolution (LTE), long term evolution-advanced (LTE-A), wideband code division multiple access (WCDMA), and high-speed packet access (HSPA), etc.

And communications between devices in a communications system may be performed according to communication protocols at any stage, which may, for example, include but not limited to the following communication protocols: 1G (generation), 2G, 2.5G, 2.75G, 3G, 4G, 4.5G, and 5G and new radio (NR) in the future, and/or other communication protocols that are currently known or will be developed in the future.

In the embodiments of this disclosure, the term "network equipment", for example, refers to an equipment in a communications system that accesses a terminal equipment to the communication network and provides services for the terminal equipment. The network equipment may include but not limited to the following equipment: a base station (BS), an access point (AP), a transmission reception point (TRP), a broadcast transmitter, a mobile management entity (MME), a gateway, a server, a radio network controller (RNC), a base station controller (BSC).

The base station may include but not limited to a node B (NodeB or NB), an evolved node B (eNodeB or eNB), and a 5G base station (gNB). Furthermore, it may include a remote radio head (RRH), a remote radio unit (RRU), a relay, or a low-power node (such as a femto, and a pico). The term "base station" may include some or all of its functions, and each base station may provide communication coverage for a specific geographical area. And a term "cell" may refer to a base station and/or its coverage area, which is dependent on a context of the term.

In the embodiments of this disclosure, the term "user equipment (UE)" or "terminal equipment (TE)" refers to, for example, equipment accessing to a communication network and receiving network services via a network device. The user equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera.

For another example, in a scenario of the Internet of Things (IoT), etc., the user equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal.

A control channel (CCH) is used for transmitting control signaling; wherein a physical downlink control channel (PDCCH) is one of the common control channels, which is used to carry scheduling and other control information. In the embodiments of this disclosure, description shall be given by taking a PDCCH in an NR system (NR-PDCCH) as an example; however, the embodiments of this disclosure are not limited thereto.

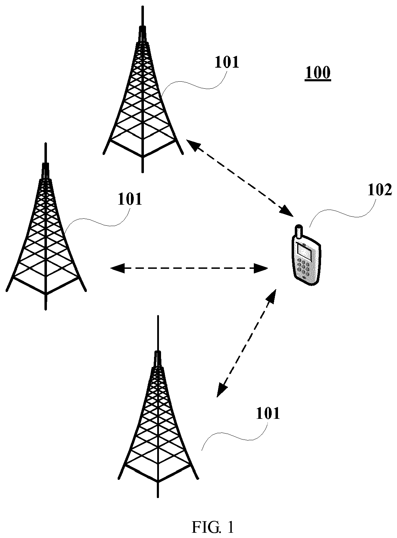

FIG. 1 is a schematic diagram of a communications system of an embodiment of this disclosure, in which a case where user equipments and network equipments are taken as examples is schematically shown. As shown in FIG. 1, the communications system 100 may include a plurality of network equipments 101 and a plurality of user equipments 102. FIG. 1 schematically gives an example where network equipments are a plurality of and user equipment is one; however, network equipment may be one, and user equipments may be a plurality of, the number of which being set as demanded.

In the embodiment of this disclosure, existing traffics or traffics that may be implemented in the future may be performed between the network equipments 101 and the user equipment 102. For example, such traffics may include but not limited to an enhanced mobile broadband (eMBB), massive machine type communication (MTC), and ultra-reliable and low-latency communication (URLLC).

### Embodiment 1

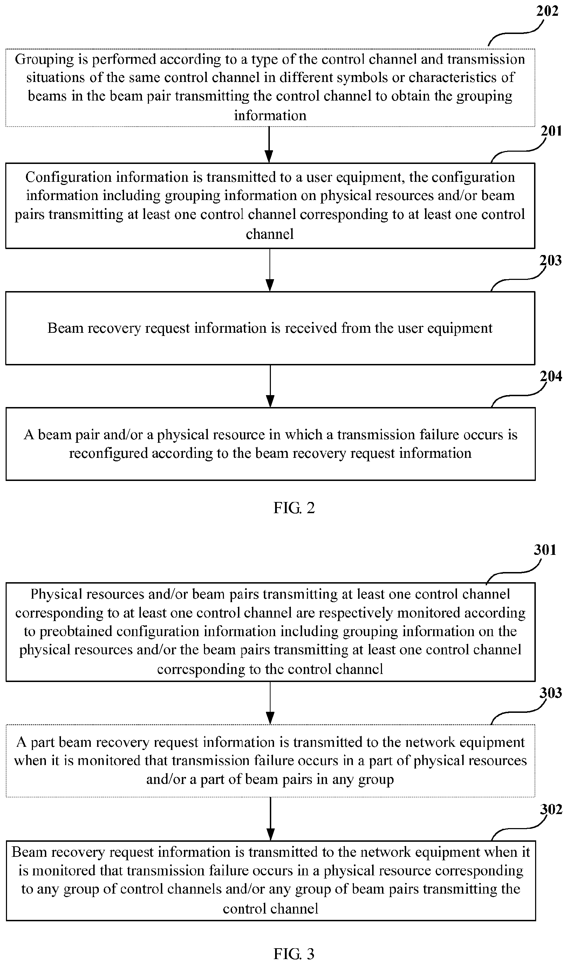

The embodiment of this disclosure provides an information configuration method, applicable to a network equipment side. FIG. 2 is a flowchart of the information configuration method of Embodiment 1 of this disclosure. As shown in FIG. 2, the method includes:
Step 201: configuration information is transmitted to a user equipment, the configuration information including grouping information on physical resources and/or beam pairs transmitting at least one control channel corresponding to at least one control channel.

In this embodiment, the physical resources and/or beam pairs in the configuration information are used by a user equipment for performing monitoring.

In this embodiment, the configuration information is used to monitor physical resources and/or beam pairs corresponding to groups of control channels at the user equipment side, such as monitoring transmission states of each group of control channels under currently configured physical resources and/or beam pairs. In this embodiment, the control channel may be a control channel of any type, for example, the control channel is a PDCCH of an NR system (NR-PDCCH). For example, the control channel is a cell common control channel, a group user common control channel, or a user-specific control channel.

In this embodiment, for example, the physical resources include a control resource set where the control channel is located or a physical resource where a demodulation reference signal of the control channel is located. However, embodiment of this disclosure is not limited to these physical resources, and they also may also be other physical resources, such as physical resources in which other channels or other signals are located.

For example, as shown in FIG. 2, optionally, before step 201, the method may further include:
Step 202, grouping is performed according to a type of the control channel and transmission situations of the same control channel in different symbols or characteristics of beams in the beam pair transmitting the control channel to obtain the grouping information.

For example, grouping may be performed according to the type of the control channel and the transmission situations of the same control channel in different symbols or characteristics of beams in the beam pair transmitting the control channel to obtain the grouping information.

For example, the grouping may be performed according to the characteristics of the control channels or the characteristics of the beams, corresponding physical resources to be monitored and/or pairs of beams to be monitored transmitting the control channels to the groups of the control channels. For example, the grouping may be performed according to the types of the control channels, configuring different physical resources to be monitored and/or pairs of beams of the control channels to be monitored for control channels of different types, i.e. control channels in different groups, or configuring different physical resources to be monitored and/or pairs of beams transmitting the control channels to be monitored for different parts in the same control channel, i.e. control channels in different groups; or the control channels may be grouped according to wideness of beams in the pairs of beams transmitting the control channels, dividing wide beam-related beams and narrow beam-related beams into different groups.

In this embodiment, for example, when the configuration information includes the grouping information on the physical resources and/or beam pairs to be transmitted corresponding to the control channels, the configuration information may be expressed as, for example, "the number of groups and/or a group index + index of a physical resource in a group corresponding to the group index and/or index of a pair of beams to be monitored corresponding to the group index".

In this embodiment, the transmission of the configuration information may be performed at a physical layer (layer 1) and/or a medium access control layer (MAC layer, layer 2) and/or a radio resource control layer (RRC layer, layer 3). For example, the configuration information may be transmitted to the user equipment via a control element (CE) of the MAC layer or the RRC layer. And also, the configuration information may be transmitted to the user equipment via a control element of the MAC layer or the RRC layer and downlink control information (DCI).

For example, initial configuration information may be transmitted via the CE of the MAC layer or the RRC layer, and when the configuration information needs to be updated according to feedback of the user equipment or other reasons, the updated configuration information may be transmitted via the DCI, including further selecting at least one group of physical resources and/or a pair of beams transmitting the control channels from a plurality of groups of configuration information to configure the user equipment.

For example, an initial control resource set may be configured by the CE of the MAC layer, and the DCI transmits the configuration information on the control resource set configured by the CE of the MAC layer.

In this embodiment, as shown in FIG. 2, the method may further include:
Step 203: beam recovery request information is received from the user equipment; and
Step 204: a beam pair and/or a physical resource in which a transmission failure occurs is reconfigured according to the beam recovery request information.

In this embodiment, the user equipment transmits a beam recovery request when a transmission failure occurs in a group of physical resources and/or pairs of beams. Furthermore, when a transmission failure occurs in a part of pairs of beams in a certain group of pairs of beams, the user equipment may first transmit a beam recovery request to recover the part of pairs of beams.

In this embodiment, the beam recovery request information is transmitted by the user equipment when it monitors that a transmission failure occurs in physical resources and/or pairs of beams corresponding to any group of control channels. Processing steps at the user equipment side shall be described in detail in Embodiment 2.

In this embodiment, the beam recovery request information may be beam recovery request information corresponding to the physical resources and/or pairs of beams in which transmission failure occurs. Hence, at the network equipment side, according to the beam request information having a corresponding relationship, it is able to be known a group of physical resources and/or pairs of beams in which transmission failure occurs, so that pairs of beams and/or physical resources used for transmitting the group of control channels may be reconfigured.

It can be seen from the above embodiment that the grouping information including physical resources corresponding to control channels and/or beam pairs transmitting control channels is transmitted at the network equipment side, and transmission states of the physical resources and/or the beam pairs corresponding to the grouping of the control channels are monitored at the UE side according to the contents of the configuration information or according to the contents of the configuration information and other configuration information, so as to obtain transmission states corresponding thereto, and a beam recovery mechanism is triggered in response to the transmission failure of the physical resources and/or the beam pairs corresponding to any group of the control channels, thereby flexibly and punctually dealing with various cases of transmission failures.

### Embodiment 2

The embodiment of this disclosure provides a monitoring method, applicable to a user equipment side, which corresponds to the processing at the network equipment side in the information configuration method in Embodiment 1, with contents identical to those in Embodiment 1 being not going to be described herein any further. FIG. 3 is a flowchart of the monitoring method of Embodiment 2 of this disclosure. As shown in FIG. 3, the method includes:
Step 301: physical resources and/or beam pairs transmitting at least one control channel corresponding to at least one control channel are respectively monitored according to preobtained configuration information including grouping information on the physical resources and/or the beam pairs transmitting at least one control channel corresponding to the control channel.

In this embodiment, particular contents of the configuration information are identical to those described in Embodiment 1, and shall not be described herein any further.

In this embodiment, the configuration information is preobtained, and may be received from a network equipment, or may be pre-configured.

In this embodiment, at a user equipment side, physical resources and/or beam pairs to be monitored corresponding to the groups of control channels are respectively monitored according to the configuration information. For example, transmission states of all pairs of beams configured for the group of control channels may be monitored, and when the number of pairs of beams in which a transmission failure occurs in all the pairs of beams reaches a predetermined threshold, it is judged that transmission of the group of control channels fails. For example, the predetermined threshold may be set to be a total number of all pairs of beams, that is, when transmission of all the pairs of beams configured for the group of control channels fails, it is judged that the transmission of the group of control channels fails. The predetermined threshold may also be less than the total number of all pairs of beams, and when the number of pairs of beams configured for the group of control channels failing in transmission reaches the predetermined threshold, it is judged that the transmission of the group of control channels fails.

In this embodiment, judgment of whether transmission of a certain pair of beams fails may be performed by detecting receiving power, for example, when the received power of the pair of beams is less than a predetermined threshold, it is deemed that the transmission of the pair of beams fails. In this embodiment, the method may further include:
Step 302: beam recovery request information is transmitted to the network equipment when it is monitored that transmission failure occurs in a physical resource corresponding to any group of control channels and/or any group of beam pairs transmitting the control channel.

In this embodiment, the beam recovery request information transmitted to the network equipment may be beam recovery request information corresponding to the physical resource and/or the pair of beams where the transmission failure occurs. Hence, at the network equipment side, according to the beam request information having a corresponding relationship, it is able to be known a group of physical resources and/or pairs of beams in which transmission failure occurs, so that pairs of beams and/or physical resources used for transmitting the group of control channels may be reconfigured.

For example, a resource or a period or a sequence transmitting the beam recovery request information corresponds to the physical resource and/or the pairs of beams where the transmission failure occurs. For example, the resource or the period or the sequence transmitting the beam recovery request information is associated with an index of the physical resource and/or pairs of beams where the transmission failure occurs.

For example, preamble sequences used for transmitting the beam recovery request information may be grouped. For example, the number of the preamble sequences configured for the beam recovery request is 10, when a first to fifth preamble sequences are transmitted, it means that a transmission failure occurs in a first group of physical resources and/or pairs of beams; and when a sixth to tenth preamble sequences are transmitted, it means that a transmission failure occurs in a second group of physical resources and/or pairs of beams.

For example, the resources used for transmitting the beam recovery request information may be grouped. For example, when the resources transmitting the beam recovery request information is a first group of physical resources, it means that a transmission failure occurs in a first group of physical resources and/or pairs of beams; and when the resources transmitting the beam recovery request information is a second group of physical resources, it means that a transmission failure occurs in a second group of physical resources and/or pairs of beams.

In this embodiment, optionally, before step 302, the method may further include:
Step 303: a part beam recovery request information is transmitted to the network equipment when it is monitored that transmission failure occurs in a part of physical resources and/or a part of beam pairs in any group.

In this embodiment, a manner of transmitting the partial beam recovery request when the transmission failure occurs in a part of the pairs of beams may be different from that in step 302; for example, a scheduling request signal or other license-free uplink channels may be used. Likewise, association may be established between the partial beam recovery request information and a group index.

It can be seen from the above embodiment that the grouping information including physical resources corresponding to control channels and/or beam pairs transmitting control channels is transmitted at the network equipment side, and transmission states of the physical resources and/or the beam pairs corresponding to the grouping of the control channels are monitored at the UE side according to the contents of the configuration information or according to the contents of the configuration information and other configuration information, so as to obtain transmission states corresponding thereto, and a beam recovery mechanism is triggered in response to the transmission failure of the physical resources and/or the beam pairs corresponding to any group of the control channels, thereby flexibly and punctually dealing with various cases of transmission failures.

### Embodiment 3

The embodiment of this disclosure provides a method for configuring information and performing monitoring by using the information, applicable to a network equipment side and a user equipment side, which corresponds to the processing at the network equipment side in the information configuration method in Embodiment 1 and the processing at the user equipment side in the monitoring method in Embodiment 2, with contents identical to those in embodiments 1 and 2 being not going to be described herein any further.

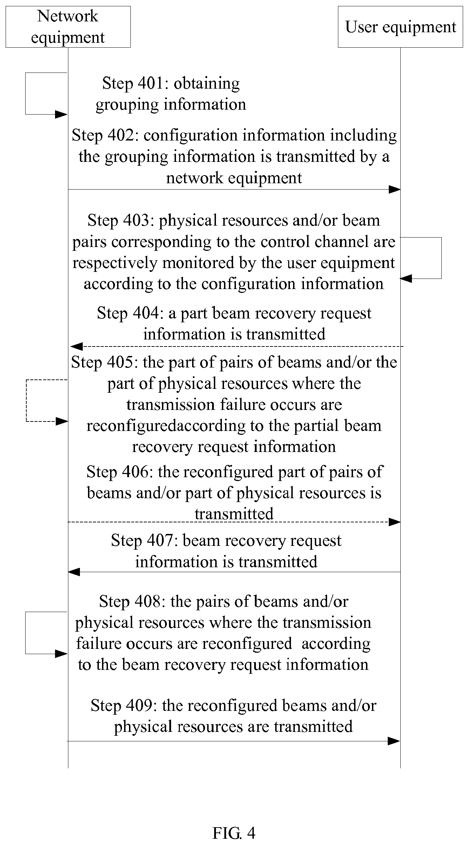

FIG. 4 is a flowchart of the method for configuring information and performing monitoring by using the information of Embodiment 3 of this disclosure. As shown in FIG. 4, the method includes:
Step 401: grouping is performed according to a type of a control channel and transmission situations of the same control channel in different symbols or characteristics of beams in a beam pair transmitting the control channel to obtain grouping information;
Step 402: configuration information including the grouping information is transmitted by a network equipment to a user equipment;
Step 403: physical resources and/or beam pairs corresponding to the control channel are respectively monitored by the user equipment according to the configuration information;
Step 404: a part beam recovery request information is transmitted to the network equipment when it is monitored that transmission failure occurs in a part of physical resources and/or a part of beam pairs in any group;
Step 405: the part of pairs of beams and/or the part of physical resources where the transmission failure occurs are reconfigured by the network equipment according to the partial beam recovery request information;
Step 406: the reconfigured part of pairs of beams and/or part of physical resources is transmitted by the network equipment to the user equipment;
Step 407: beam recovery request information is transmitted to the network equipment when it is monitored by the user equipment that transmission failure occurs in a physical resource corresponding to any group of control channels and/or any group of beam pairs transmitting the control channel;
Step 408: the pairs of beams and/or physical resources where the transmission failure occurs are reconfigured by the network equipment according to the beam recovery request information; and
Step 409: the reconfigured beams and/or physical resources are transmitted by the network equipment to the user equipment.

In this embodiment, in step 401, for example, the network equipment may perform the grouping of the control channels according to the types of the control channels or the transmission states of the same control channel in different symbols to obtain the grouping information.

In this embodiment, steps 404, 405 and 406 arc optional.

It can be seen from the above embodiment that the grouping information including physical resources corresponding to control channels and/or beam pairs transmitting control channels is transmitted at the network equipment side, and transmission states of the physical resources and/or the beam pairs corresponding to the grouping of the control channels are monitored at the UE side according to the contents of the configuration information or according to the contents of the configuration information and other configuration information, so as to obtain transmission states corresponding thereto, and a beam recovery mechanism is triggered in response to the transmission failure of the physical resources and/or the beam pairs corresponding to any group of the control channels, thereby flexibly and punctually dealing with various cases of transmission failures.

### Embodiment 4

The embodiment of this disclosure provides an information configuration apparatus, corresponding to the information configuration method in Embodiment 1. Reference may be made to the implementation of the information configuration method in Embodiment 1 for implementation of the apparatus, with repeated parts being not going to be described herein any further.

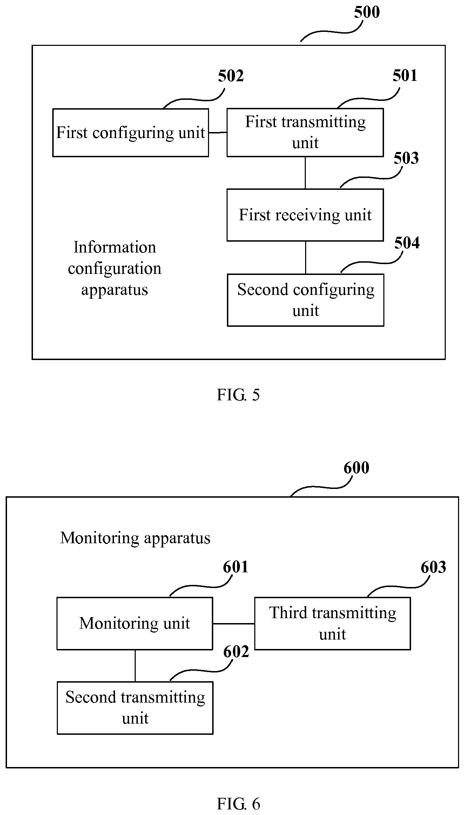

FIG. 5 is a schematic diagram of the information configuration apparatus of Embodiment 4 of this disclosure. As shown in FIG. 5, an information configuration apparatus 500 includes:
a first transmitting unit 501 configured to transmit configuration information for monitoring control channels to a user equipment, the configuration information including grouping information on physical resources and/or beam pairs corresponding to the control channels.

In this embodiment, reference may be made to Embodiment 1 for particular contents of the configuration information, which shall not be described herein any further.

In this embodiment, as shown in FIG. 5, optionally, the apparatus 500 may further include:
a first configuring unit 502 configured to group according to a type of the control channel and transmission situations of the same control channel in different symbols or characteristics of beams in the beam pair transmitting the control channel to obtain the grouping information.

In this embodiment, the apparatus 500 may further include:
a first receiving unit 503 configured to receive beam recovery request information from the UE; and
a second configuring unit 504 configured to reconfigure a beam pair and/or a physical resource in which transmission failure occurs according to the beam recovery request information.

It can be seen from the above embodiment that the grouping information including physical resources corresponding to control channels and/or beam pairs transmitting control channels is transmitted at the network equipment side, and transmission states of the physical resources and/or the beam pairs corresponding to the grouping of the control channels are monitored at the UE side according to the contents of the configuration information or according to the contents of the configuration information and other configuration information, so as to obtain transmission states corresponding thereto, and a beam recovery mechanism is triggered in response to the transmission failure of the physical resources and/or the beam pairs corresponding to any group of the control channels, thereby flexibly and punctually dealing with various cases of transmission failures.

### Embodiment 5

The embodiment of this disclosure provides a monitoring apparatus, corresponding to the method for monitoring control channels in Embodiment 2. Reference may be made to the implementation of the method for monitoring control channels in Embodiment 2 for implementation of the apparatus, with repeated parts being not going to be described herein any further.

FIG. 6 is a schematic diagram of the apparatus for monitoring control channels of Embodiment 5 of this disclosure. As shown in FIG. 6, a monitoring apparatus 600 includes:
a monitoring unit 601 configured to respectively monitor physical resources and/or beam pairs transmitting at least one control channel corresponding to at least one control channel according to preobtained configuration information including grouping information on the physical resources and/or the beam pairs transmitting at least one control channel corresponding to the control channel.

In this embodiment, reference may be made to Embodiment 1 for particular contents of the configuration information, which shall not be described herein any further.

In this embodiment, as shown in FIG. 6, the apparatus 600 may further include:
a second transmitting unit 602 configured to transmit beam recovery request information to network equipment when it is monitored by the monitoring unit that transmission failure occurs in a physical resource corresponding to any group of control channels and/or any group of beam pairs transmitting the control channel.

In this embodiment, as shown in FIG. 6, optionally, the apparatus 600 may further include:
a third transmitting unit 603 configured to transmit a part beam recovery request information to the network equipment when it is monitored that transmission failure occurs in a part of physical resources and/or a part of beam pairs in any group.

It can be seen from the above embodiment that the grouping information including physical resources corresponding to control channels and/or beam pairs transmitting control channels is transmitted at the network equipment side, and transmission states of the physical resources and/or the beam pairs corresponding to the grouping of the control channels are monitored at the UE side according to the contents of the configuration information or according to the contents of the configuration information and other configuration information, so as to obtain transmission states corresponding thereto, and a beam recovery mechanism is triggered in response to the transmission failure of the physical resources and/or the beam pairs corresponding to any group of the control channels, thereby flexibly and punctually dealing with various cases of transmission failures.

### Embodiment 6

The embodiment of this disclosure provides a network equipment, including the information configuration apparatus in Embodiment 4.

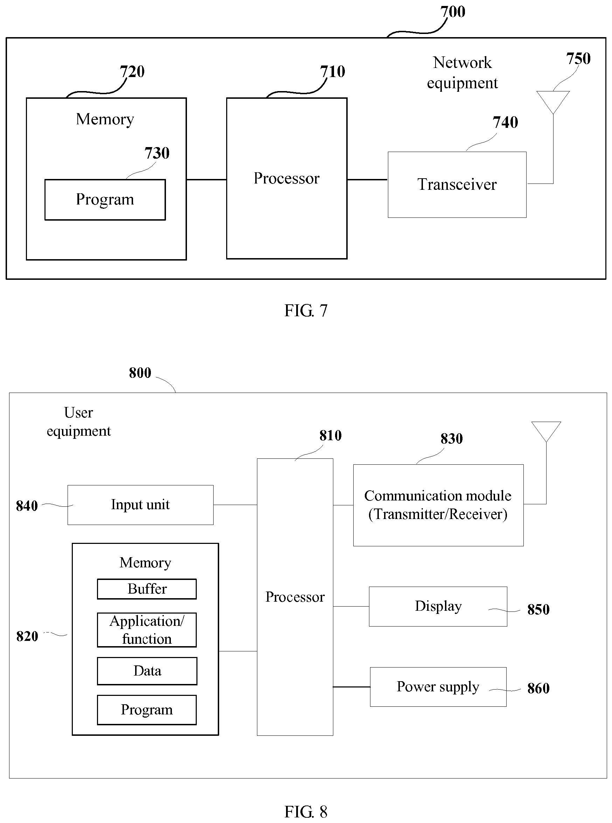

FIG. 7 is a schematic diagram of a structure of the network equipment of the embodiment of this disclosure. As shown in FIG. 7, a network equipment 700 may include a processor 710 and a memory 720, the memory 720 being coupled to the processor 710. The memory 720 may store various data, and furthermore, it may store a program 730 for data processing, and execute the program 730 under control of the processor 710, so as to receive various information transmitted by a user equipment, and transmit request information to the user equipment.

In one implementation, the functions of the information configuration apparatus may be integrated into the processor 710. The processor 710 may be configured to: transmit configuration information to a user equipment, the configuration information including grouping information on physical resources and/or beam pairs corresponding to the control channels.

For example, the physical resources include a control resource set where the control channel is located or a physical resource where a demodulation reference signal of the control channel is located.

For example, the transmitting configuration information to a user equipment includes: transmitting the configuration information to the user equipment via a control element of a radio resource control layer or a medium access control layer and downlink control information; wherein, the downlink control information is used for selecting at least one group of physical resources and/or at least one group of beam pairs transmitting the control channel from grouping information transmitted by the control element of the radio resource control layer or the medium access control layer to configure the UE.

For example, the processor 710 may further be configured to: group according to a type of the control channel and transmission situations of the same control channel in different symbols or characteristics of beams in the beam pair transmitting the control channel to obtain the grouping information.

For example, the processor 710 may further be configured to: receive beam recovery request information from the UE; and reconfigure a beam pair and/or a physical resource in which transmission failure occurs according to the beam recovery request information.

In another implementation, the information configuration apparatus and the central processor 710 may be configured separately. For example, the information configuration apparatus may be configured as a chip connected to the processor 710, with its functions being realized under control of the processor 710.

Furthermore, as shown in FIG. 7, the network equipment 700 may include a transceiver 740, and an antenna 750, etc. Functions of the above components are similar to those in the related art, and shall not be described herein any further. It should be noted that the network equipment 700 does not necessarily include all the parts shown in FIG. 7, and furthermore, the network equipment 700 may include parts not shown in FIG. 7, and the related art may be referred to.

It can be seen from the above embodiment that the grouping information including physical resources corresponding to control channels and/or beam pairs transmitting control channels is transmitted at the network equipment side, and transmission states of the physical resources and/or the beam pairs corresponding to the grouping of the control channels are monitored at the UE side according to the contents of the configuration information or according to the contents of the configuration information and other configuration information, so as to obtain transmission states corresponding thereto, and a beam recovery mechanism is triggered in response to the transmission failure of the physical resources and/or the beam pairs corresponding to any group of the control channels, thereby flexibly and punctually dealing with various cases of transmission failures.

### Embodiment 7

The embodiment of this disclosure provides a user equipment, including the monitoring apparatus described in Embodiment 5.

FIG. 8 is a block diagram of a systematic structure of the user equipment of an embodiment of this disclosure. As shown in FIG. 8, a user equipment 800 may include a processor 810 and a memory 820, the memory 820 being coupled to the processor 810. It should be noted that this figure is illustrative only, and other types of structures may also be used, so as to supplement or replace this structure and achieve a telecommunications function or other functions.

In one implementation, the functions of the monitoring apparatus may be integrated into the processor 810. The processor 810 may be configured to: respectively monitor physical resources and/or beam pairs transmitting at least one control channel corresponding to at least one control channel according to preobtained configuration information including grouping information on the physical resources and/or the beam pairs transmitting at least one control channel corresponding to the control channel.

For example, the physical resources include a control resource set where the control channel is located or a physical resource where a demodulation reference signal of the control channel is located.

For example, the processor 810 may further be configured to: transmit beam recovery request information to network equipment when it is monitored that transmission failure occurs in a physical resource corresponding to any group of control channels and/or any group of beam pairs transmitting the control channel.

For example, the processor 810 may further be configured to: transmit a part beam recovery request information to the network equipment when it is monitored that transmission failure occurs in a part of physical resources and/or a part of beam pairs in any group.

In another implementation, the monitoring apparatus and the processor 810 may be configured separately. For example, the monitoring apparatus may be configured as a chip connected to the processor 810, with its functions being realized under control of the processor 810.

As shown in FIG. 8, the user equipment 800 may further include a communication module 830, an input unit 840, a display 850, and a power supply 860. It should be noted that the user equipment 800 does not necessarily include all the parts shown in FIG. 8, and the above components are not necessary; and furthermore, the user equipment 800 may include parts not shown in FIG. 8, and the related art may be referred to.

As shown in FIG. 8, the processor 810 is sometimes referred to as a controller or control, which may include a microprocessor or other processor devices and/or logic devices, and the processor 810 receives input and controls operations of every component of the user equipment 800.

The memory 820 may be, for example, one or more of a buffer memory, a flash memory, a hard drive, a mobile medium, a volatile memory, a nonvolatile memory, or other suitable devices, which may store the information on configuration, etc., and furthermore, store programs executing related information. And the processor 810 may execute programs stored in the memory 820, so as to realize information storage or processing, etc. Functions of other parts are similar to those of the related art, which shall not be described herein any further. The parts of the user equipment 800 may be realized by specific hardware, firmware, software, or any combination thereof, without departing from the scope of the present disclosure.

It can be seen from the above embodiment that the grouping information including physical resources corresponding to control channels and/or beam pairs transmitting control channels is transmitted at the network equipment side, and transmission states of the physical resources and/or the beam pairs corresponding to the grouping of the control channels are monitored at the UE side according to the contents of the configuration information or according to the contents of the configuration information and other configuration information, so as to obtain transmission states corresponding thereto, and a beam recovery mechanism is triggered in response to the transmission failure of the physical resources and/or the beam pairs corresponding to any group of the control channels, thereby flexibly and punctually dealing with various cases of transmission failures.

### Embodiment 8

The embodiment of this disclosure provides a communications system, including the network equipment as described in Embodiment 6 and the user equipment as described in Embodiment 7. For example, a structure of the communications system may be as shown in FIG. 1. As shown in FIG. 1, the communications system 100 includes the network equipment 101 and the user equipment 102, a structure and functions of the network equipment 101 may be as described in Embodiment 6, and a structure and functions of the user equipment 102 may be as described in Embodiment 7, which shall not be described herein any further.

It can be seen from the above embodiment that the grouping information including physical resources corresponding to control channels and/or beam pairs transmitting control channels is transmitted at the network equipment side, and transmission states of the physical resources and/or the beam pairs corresponding to the grouping of the control channels are monitored at the UE side according to the contents of the configuration information or according to the contents of the configuration information and other configuration information, so as to obtain transmission states corresponding thereto, and a beam recovery mechanism is triggered in response to the transmission failure of the physical resources and/or the beam pairs corresponding to any group of the control channels, thereby flexibly and punctually dealing with various cases of transmission failures.

The above apparatuses and methods of this disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in FIG. 5 may either correspond to software modules of procedures of a computer program, or correspond to hardware modules. Such software modules may respectively correspond to the steps shown in FIG. 1. And the hardware module, for example, may be carried out by firming the soft modules by using a field programmable gate array (FPGA).

The soft modules may be located in an RAM, a flash memory, an ROM, an EPROM, and an EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, when equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present disclosure.

## Claims

1. A network equipment (700) comprising an information configuration apparatus (500), comprising:
a first transmitting unit (501) configured to transmit configuration information to a user equipment, UE, (800) the configuration information comprising grouping information on physical resources corresponding to at least one control channel or reference signal,
**characterised in that** the apparatus (500) further comprises:
a first receiving unit (503) configured to receive beam recovery request information transmitted by the UE (800) when the UE (800) monitored that transmission failure occurs in physical resources belonging to a group of the physical resources according to the configuration information.

2. The network equipment (700) according to claim 1, wherein the physical resources comprise a control resource set where the control channel is located or a physical resource where a demodulation reference signal of the control channel is located.

3. The network equipment (700) according to claim 1, wherein the first transmitting unit (501) is configured to transmit the configuration information to the UE (800) via a control element of a radio resource control layer or a medium access control layer and downlink control information; and wherein, the downlink control information is used for selecting at least one group of physical resources and/or at least one group of beam pairs transmitting the control channel from grouping information transmitted by the control element of the radio resource control layer or the medium access control layer to configure the UE (800).

4. The network equipment (700) according to claim 1, wherein the apparatus further comprises:
a first configuring unit configured to group according to a type of the control channel and transmission situations of the same control channel in different symbols or characteristics of beams in the beam pair transmitting the control channel to obtain the grouping information.

5. The network equipment (700) according to claim 1, wherein the apparatus further comprises:
a second configuring unit (504) configured to reconfigure a beam pair and/or a physical resource in which transmission failure occurs according to the beam recovery request information.

6. A user equipment, UE, (800) comprising a monitoring apparatus (600), comprising:
a monitoring unit (601) configured to respectively monitor physical resources and/or beam pairs transmitting at least one control channel corresponding to at least one control channel according to preobtained configuration information comprising grouping information on the physical resources corresponding to at least one control channel or reference signal,
**characterised in that** the apparatus further comprises:
a second transmitting unit configured to transmit beam recovery request information to network equipment (700) when it is monitored by the monitoring unit (601) that transmission failure occurs in physical resources belonging to a group of the physical resources according to the configuration information.

7. The UE (800) according to claim 6, wherein the physical resources comprise a control resource set where the control channel is located or a physical resource where a demodulation reference signal of the control channel is located.

8. The UE (800) according to claim 6, wherein a resource or a period or a sequence transmitting the beam recovery request information corresponds to the physical resource and/or the beam pairs in which the transmission failure occurs.

9. The UE (800) according to claim 8, wherein the apparatus (600) further comprises:
a third transmitting unit (603) configured to transmit a part beam recovery request information to the network equipment (700) when it is monitored that transmission failure occurs in a part of physical resources and/or a part of beam pairs in any group.

10. A communications system (100), comprising the network equipment (700) as claimed in any one of claims 1-5 and the UE (800) as claimed in any one of claims 6-9.

## Patentansprüche

1. Netzwerkgerät (700), umfassend eine Informationskonfigurationsvorrichtung (500), die Folgendes umfasst:
eine erste Übertragungseinheit (501), die dazu konfiguriert ist, Konfigurationsinformationen an ein Benutzergerät (user equipment - UE) (800) zu übertragen, wobei die Konfigurationsinformationen Gruppierungsinformationen über physische Ressourcen umfassen, die mindestens einem Steuerkanal oder Referenzsignal entsprechen,
**dadurch gekennzeichnet, dass** die Vorrichtung (500) ferner umfasst:
eine erste Empfangseinheit (503), die dazu konfiguriert ist, Informationen zu einer Strahlwiederherstellungsanforderung zu empfangen, die durch das UE (800) übertragen werden, wenn das UE (800) beobachtet, dass ein Übertragungsfehler in physischen Ressourcen auftritt, die gemäß der Konfigurationsinformationen zu einer Gruppe der physischen Ressourcen gehören.

2. Netzwerkgerät (700) nach Anspruch 1, wobei die physischen Ressourcen einen Steuerressourcensatz, in dem sich der Steuerkanal befindet, oder eine physischen Ressource umfassen, in der sich ein Demodulationsreferenzsignal des Steuerkanals befindet.

3. Netzwerkgerät (700) nach Anspruch 1, wobei die erste Übertragungseinheit (501) dazu konfiguriert ist, die Konfigurationsinformationen an das UE (800) über ein Steuerelement einer Funkressourcensteuerschicht oder einer Medienzugriffssteuerschicht und Downlink-Steuerinformationen zu übertragen; und wobei die Downlink-Steuerinformationen dazu verwendet werden, mindestens eine Gruppe von physischen Ressourcen und/oder mindestens eine Gruppe von Strahlenpaaren, die den Steuerkanal übertragen, aus Gruppierungsinformationen auszuwählen, die durch das Steuerelement der Funkressourcensteuerschicht oder der Medienzugriffssteuerschicht übertragen werden, um das UE (800) zu konfigurieren.

4. Netzwerkgerät (700) nach Anspruch 1, wobei das Gerät ferner Folgendes umfasst:
eine erste Konfigurationseinheit, die dazu konfiguriert ist, je nach Art des Steuerkanals und der Übertragungssituationen desselben Steuerkanals in verschiedenen Symbolen oder Eigenschaften von Strahlen in dem Strahlenpaar, das den Steuerkanal überträgt, zu gruppieren, um die Gruppierungsinformationen zu erlangen.

5. Netzwerkgerät (700) nach Anspruch 1, wobei das Gerät ferner Folgendes umfasst:
eine zweite Konfigurationseinheit (504), die dazu konfiguriert ist, ein Strahlenpaar und/oder eine physische Ressource, in der ein Übertragungsfehler gemäß der Informationen zur Strahlwiederherstellungsanforderung auftritt, neu zu konfigurieren.

6. Benutzergerät, UE, (800), umfassend eine Überwachungsvorrichtung (600), die Folgendes umfasst:
eine Überwachungseinheit (601), die dazu konfiguriert ist, jeweils physische Ressourcen und/oder Strahlenpaare zu überwachen, die mindestens einen Steuerkanal übertragen, der mindestens einem Steuerkanal gemäß zuvor erlangten Konfigurationsinformationen entspricht, die Gruppierungsinformationen zu den physischen Ressourcen umfassen, die mindestens einem Steuerkanal oder Referenzsignal entsprechen,
**dadurch gekennzeichnet, dass** die Vorrichtung ferner umfasst:
eine zweite Übertragungseinheit, die dazu konfiguriert ist, Informationen zu einer Strahlwiederherstellungsanforderung an Netzwerkgeräte (700) zu übertragen, wenn von der Überwachungseinheit (601) beobachtet wird, dass ein Übertragungsfehler in physischen Ressourcen auftritt, die zu einer Gruppe der physischen Ressourcen gemäß den Konfigurationsinformationen gehören.

7. UE (800) nach Anspruch 6, wobei die physischen Ressourcen einen Steuerressourcensatz, in dem sich der Steuerkanal befindet, oder eine physischen Ressource umfassen, in der sich ein Demodulationsreferenzsignal des Steuerkanals befindet.

8. UE (800) nach Anspruch 6, wobei eine Ressource oder eine Periode oder eine Sequenz, welche die Informationen zur Strahlwiederherstellungsanforderung sendet, der physischen Ressource und/oder den Strahlenpaaren entspricht, in denen der Übertragungsfehler auftritt.

9. UE (800) nach Anspruch 8, wobei die Vorrichtung (600) ferner umfasst:
eine dritte Übertragungseinheit (603), die dazu konfiguriert ist, Informationen zu einer Teilstrahlwiederherstellungsanforderung an das Netzwerkgerät (700) zu übertragen, wenn beobachtet wird, dass ein Übertragungsfehler in einem Teil von physischen Ressourcen und/oder einem Teil von Strahlenpaaren in einer beliebigen Gruppe auftritt.

10. Kommunikationssystem (100), umfassend das Netzwerkgerät (700) nach einem der Ansprüche 1-5 und das UE (800) nach einem der Ansprüche 6-9.

## Revendications

1. Équipement de réseau (700) comprenant un appareil de configuration d'informations (500), comprenant :
une première unité de transmission (501) configurée pour transmettre des informations de configuration à un équipement utilisateur, UE, (800) les informations de configuration comprenant des informations de regroupement de ressources physiques correspondant à au moins un canal de commande ou signal de référence,
**caractérisé en ce que** l'appareil (500) comprend en outre :
une première unité de réception (503) configurée pour recevoir des informations de demande de récupération de faisceau transmises par l'UE (800) lorsque l'UE (800) surveille qu'une défaillance de transmission se produit dans des ressources physiques appartenant à un groupe des ressources physiques selon les informations de configuration.

2. Équipement de réseau (700) selon la revendication 1, dans lequel les ressources physiques comprennent un ensemble de ressources de commande où se trouve le canal de commande ou une ressource physique où se trouve un signal de référence de démodulation du canal de commande.

3. Équipement de réseau (700) selon la revendication 1, dans lequel la première unité de transmission (501) est configurée pour transmettre les informations de configuration à l'UE (800) via un élément de commande d'une couche de commande de ressource radio ou d'une couche de commande d'accès au support et des informations de commande de liaison descendante ; et dans lequel, les informations de commande de liaison descendante sont utilisées pour sélectionner au moins un groupe de ressources physiques et/ou au moins un groupe de paires de faisceaux transmettant le canal de commande à partir d'informations de regroupement transmises par l'élément de commande de la couche de commande de ressource radio ou la couche de commande d'accès au support pour configurer l'UE (800).

4. Équipement de réseau (700) selon la revendication 1, dans lequel l'appareil comprend en outre :
une première unité de configuration configurée pour regrouper selon un type du canal de commande et des situations de transmission du même canal de commande dans différents symboles ou caractéristiques de faisceaux dans la paire de faisceaux transmettant le canal de commande pour obtenir les informations de regroupement.

5. Équipement de réseau (700) selon la revendication 1, dans lequel l'appareil comprend en outre :
une deuxième unité de configuration (504) configurée pour reconfigurer une paire de faisceaux et/ou une ressource physique dans laquelle une défaillance de transmission se produit selon les informations de demande de récupération de faisceau.

6. Équipement utilisateur, UE, (800) comprenant un appareil de surveillance (600), comprenant :
une unité de surveillance (601) configurée pour surveiller respectivement des ressources physiques et/ou des paires de faisceaux transmettant au moins un canal de commande correspondant à au moins un canal de commande selon des informations de configuration pré-obtenues comprenant des informations de regroupement sur les ressources physiques correspondant à au moins un canal de commande ou signal de référence,
**caractérisé en ce que** l'appareil comprend en outre :
une deuxième unité de transmission configurée pour transmettre des informations de demande de récupération de faisceau à un équipement de réseau (700) lorsqu'il est surveillé par l'unité de surveillance (601) qu'une défaillance de transmission se produit dans des ressources physiques appartenant à un groupe des ressources physiques selon les informations de configuration.

7. UE (800) selon la revendication 6, dans lequel les ressources physiques comprennent un ensemble de ressources de commande où se trouve le canal de commande ou une ressource physique où se trouve un signal de référence de démodulation du canal de commande.

8. UE (800) selon la revendication 6, dans lequel une ressource ou une période ou une séquence transmettant l'information de demande de récupération de faisceau correspond à la ressource physique et/ou aux paires de faisceaux dans lesquelles la défaillance de transmission se produit.

9. UE (800) selon la revendication 8, dans lequel l'appareil (600) comprend en outre :
une troisième unité de transmission (603) configurée pour transmettre des informations de demande de récupération de partie de faisceau à l'équipement de réseau (700) lorsqu'il est surveillé qu'une défaillance de transmission se produit dans une partie de ressources physiques et/ou une partie de paires de faisceaux dans un groupe quelconque.

10. Système de communication (100), comprenant l'équipement de réseau (700) selon l'une quelconque des revendications 1 à 5 et l'UE (800) selon l'une quelconque des revendications 6 à 9.
